Europäisches Patentamt

European Patent Office

Office européen des brevets

(19)

(11) Numéro de publication : **0 395 480 B1**

(12) **FASCICULE DE BREVET EUROPEEN**

(45) Date de publication du fascicule du brevet :
**08.06.94 Bulletin 94/23**

(51) Int. Cl.$^5$ : **G01S 13/52**

(21) Numéro de dépôt : **90401084.0**

(22) Date de dépôt : **20.04.90**

(54) **Procédé et dispositif d'analyse spectrale à haute résolution pour signaux de système de détection électromagnétique non stationnaires.**

(30) Priorité : **28.04.89 FR 8905677**

(43) Date de publication de la demande :
**31.10.90 Bulletin 90/44**

(45) Mention de la délivrance du brevet :
**08.06.94 Bulletin 94/23**

(84) Etats contractants désignés :
**DE GB**

(56) Documents cités :
**EP-A- 0 234 993
EP-A- 0 264 525
EP-A- 0 277 772
DE-A- 2 256 563
FR-A- 2 494 870
US-A- 3 900 872**

(73) Titulaire : **LE CENTRE THOMSON
D'APPLICATIONS RADARS - LCTAR
6, rue Nieuport
78143-Vélizy-Villacoublay (FR)**

(72) Inventeur : **Baudas, Sylvain
SCPI- Cédex 67
F-92045 Paris La Défense (FR)**
Inventeur : **Delhote, Christian
SCPI- Cédex 67
F-92045 Paris La Défense (FR)**

(74) Mandataire : **Albert, Claude et al
THOMSON-CSF
SCPI
B.P. 329
50, rue J.P. Timbaud
F-92402 COURBEVOIE CEDEX (FR)**

EP 0 395 480 B1

## Description

La présente invention se rapporte à un procédé et à un dispositif d'analyse spectrale à haute résolution pour signaux de système de détection électromagnétique non stationnaires où ces signaux subissent une première analyse spectrale glissante classique sur une première durée d'analyse correspondant à la durée de validité du modèle d'évolution choisi pour lesdits signaux non stationnaires.

Par "système de détection électromagnétique", on entendra dans toute la description et les revendications tout système permettant la détection d'une cible par analyse, en particulier en fréquence, des signaux électromagnétiques réfléchis ou émis par la cible. De tels systèmes comprennent notamment les radars ainsi que les barrières électromagnétiques dans lesquelles un émetteur émet un faisceau large vers un récepteur situé à distance, les cibles étant détectées par les perturbations qu'elles induisent, par leur passage dans le faisceau, dans la transmission entre récepteur et émetteur.

Dans le traitement de certains signaux issus de tels systèmes de détection électromagnétique, les performances de détection et de dénombrement de cibles en situation multicibles dépendent de la qualité de l'analyse spectrale. Ceci est particulièrement vrai pour les barrières électromagnétiques où le seul critère de détection est obtenu par analyse spectrale. Un des facteurs essentiels pour l'obtention de bonnes performances est alors le pouvoir de résolution fréquentielle. Depuis un certain nombre d'années, on a mis au point et perfectionné des méthodes d'analyse spectrale à haute résolution pour des signaux radars stationnaires. En effet, les méthodes classiques utilisant la transformée de Fourier sont intrinsèquement limitées en résolution par l'inverse du temps d'analyse T du signal. Dans certaines conditions de stationnarité des signaux, on a donc proposé des méthodes d'analyse spectrale telles que celles basées sur une modélisation autorégressive du processus étudié. Cependant l'hypothèse de stationnarité conduit dans la pratique à une limitation du temps d'analyse et donc à une limitation de la résolution due aux non-stationnarités du signal.

L'invention a pour objet de remédier à ces inconvénients en prévoyant un traitement simple adapté aux signaux non stationnaires.

Un autre objet de l'invention est un procédé et un dispositif d'analyse spectrale à haute résolution consistant à rendre les signaux sensiblement stationnaires avant de leur appliquer une analyse spectrale classique.

Selon l'invention, il est donc prévu un procédé d'analyse spectrale à haute résolution pour signaux de système de détection électromagnétique non stationnaires, dans lequel on réalise une première analyse spectrale glissante de type connu desdits signaux sur une première durée d'analyse correspondant à la durée de validité du modèle d'évolution choisi pour lesdits signaux non stationnaires, ledit procédé étant caractérisé en ce qu'il consiste à :

- effectuer un pistage Doppler, en fonction du temps, de la fréquence instantanée obtenue par ladite première analyse ;
- estimer pour une piste choisie les paramètres de la loi d'évolution de la fréquence Doppler retenue ;
- déterminer à partir desdits paramètres un signal synthétique de fréquence instantanée opposée à la fréquence instantanée estimée théorique correspondant auxdits paramètres ;
- stationnariser lesdits signaux fournis par ledit système par démodulation à l'aide dudit signal synthétique ;
- effectuer une seconde analyse spectrale de type connu dudit signal stationnarisé, sur une durée d'analyse longue par rapport à la première durée d'analyse pour obtenir une résolution améliorée ; et
- effectuer un dénombrement des cibles dans le signal analysé selon ladite seconde analyse par comparaison à un seuil déterminé.

Selon un autre aspect de l'invention il est également prévu un dispositif d'analyse spectrale à haute définition mettant en oeuvre le procédé ci-dessus.

L'invention sera mieux comprise et d'autres caractéristiques et avantages apparaîtront à l'aide de la description ci-après et des dessins joints où :

- la figure 1 est un schéma par blocs du dispositif d'analyse spectrale selon l'invention ;
- la figure 2 est un diagramme temps-fréquence de deux motifs correspondant à des signaux non séparés par transformée de Fourier classique ;
- la figure 3 représente le spectre d'un des motifs à signaux non séparés ; et
- la figure 4 représente le spectre d'un des motifs après traitement selon l'invention.

Comme on l'a déjà expliqué ci-dessus, lorsque les signaux fournis par un système de détection électromagnétique sont fortement non stationnaires, c'est-à-dire que la fréquence Doppler évolue rapidement au cours du temps, la résolution en fréquence des procédés d'analyse spectrale classiques est 1/ t dans le cas de la transformée de Fourier. Or t, durée d'analyse, est limitée par le temps pendant lequel l'hypothèse faite sur la trajectoire de la cible est vraie. t étant fortement limitée du fait de la non-stationnarité du signal, la résolution est également fortement limitée.

Pour simplifier et préciser l'explication, on va supposer, sans que cela soit en rien limitatif de l'invention, que l'on est en présence de deux cibles multiples comprenant chacune cinq cibles proches se déplaçant ensemble. Si l'on suppose aussi que la fréquence Doppler des deux groupes de cibles évolue rapidement, l'analyse spectrale classique, par exemple par transformée de Fourier ne permet pas de séparer les cibles composant chacune des deux cibles multiples.

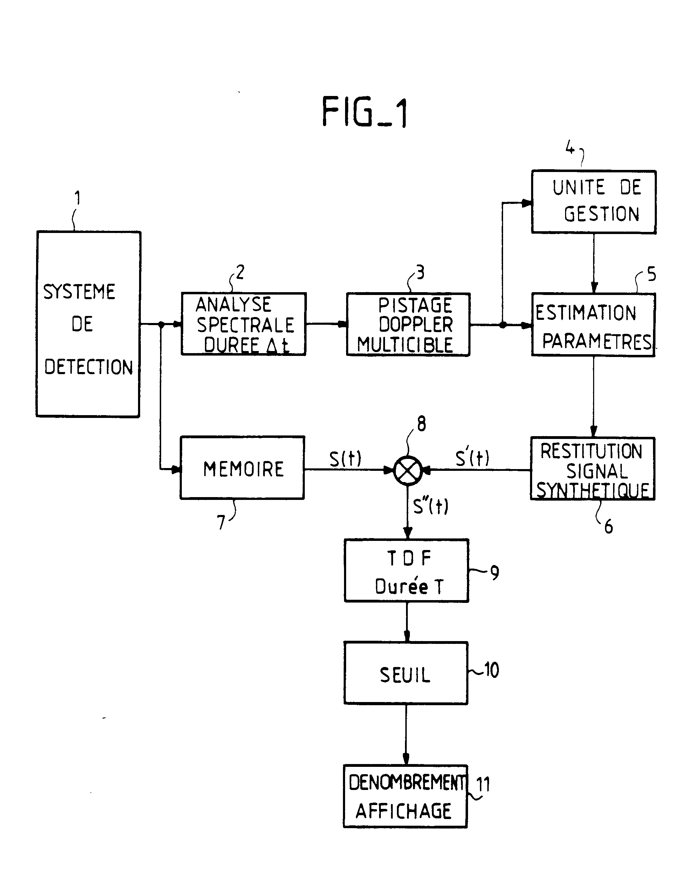

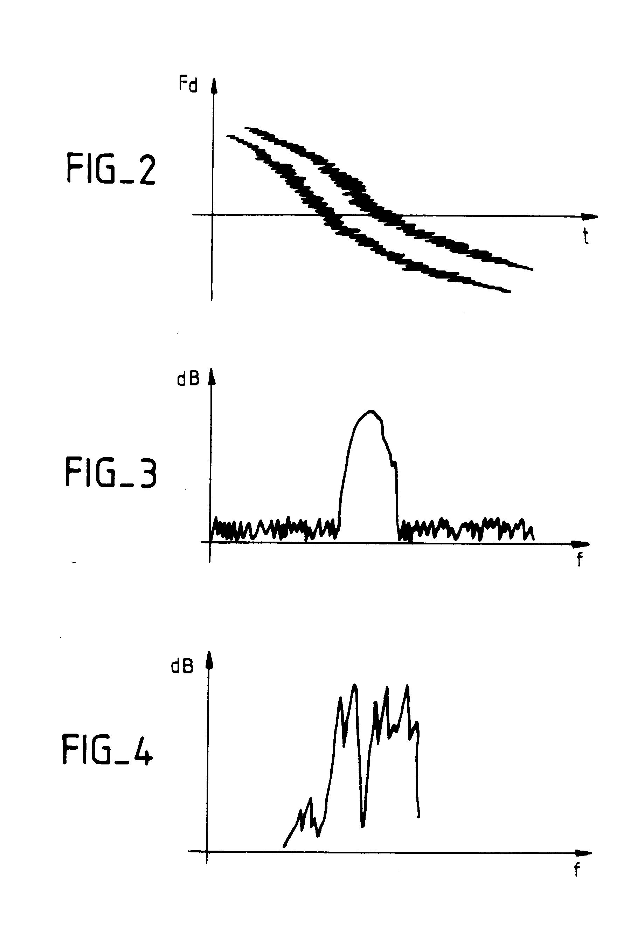

La figure 1 représente le schéma du dispositif selon l'invention. Le système de détection électromagnétique 1 fournit des signaux s(t) à un dispositif d'analyse spectrale classique 2 à durée d'analyse courte $\Delta t$. Par analyse glissante, on dispose de spectres successifs au cours du temps qui sont représentés sur le diagramme de la figure 2 où on retrouve deux motifs formés des cinq signaux non séparés. Ces spectres successifs sont envoyés à un système de pistage Doppler multicible 3 qui permet d'analyser séparément chaque piste correspondant à un motif. Un tel système de pistage est décrit par exemple dans le brevet français N° 80 25039. Une unité de gestion 4 permet de sélectionner une des pistes et de commander un dispositif d'estimation des paramètres de la cible (multicible en fait) choisie qui, à partir de la loi d'évolution de la fréquence Doppler au cours du temps fournie par le système 3, permet de modéliser cette loi d'évolution et de calculer les paramètres correspondants de la cible.

Le modèle utilisé peut être un modèle simple mais général de modulation linéaire de fréquence du type :

$$f_i(t) = f_i + \alpha_i t$$

où $f_i(t)$ est la fréquence instantanée du signal, $f_i$ est une valeur donnée initiale et $\alpha_i$ est la pente de modulation. Dans les zones où le modèle linéaire est valide, le dispositif 5 estime les valeurs $\hat{f}_i$ et $\hat{\alpha}_i$, par exemple par la méthode des moindres carrés. On peut aussi prendre un modèle plus complet et spécifique du système de détection considéré : dans le cas d'une barrière électromagnétique par exemple, la loi d'évolution de la fréquence Doppler peut s'exprimer simplement en fonction de paramètres de la cible tels que vitesse de la cible, angle de la trajectoire par rapport à la ligne joignant émetteur et récepteur, position du point de coupure de cette ligne par la trajectoire, altitude de la cible ou distance de l'origine de la trajectoire audit point de coupure. Quel que soit le modèle choisi, si on appelle $\vec{\theta}$ les paramètres à déterminer et $f_{th}(t, \vec{\theta})$ la loi d'évolution théorique (modèle) de la fréquence Doppler, le dispositif 5 estime les paramètres en minimisant l'expression :

$$\int_{t_1}^{t_2} [f(t)_{\text{mesurée}} - f_{th}(t, \vec{\theta})]^2 \, dt$$

où f(t) est la loi d'évolution fournie par le système de pistage mesurée 3 entre les instants $t_1$ et $t_2$.

Ces paramètres $\vec{\theta}$ sont envoyés à un système 6 de restitution d'un signal synthétique qui calcule un signal s'(t) de fréquence instantanée opposée à la fréquence théorique du modèle estimé. Par exemple dans le cas du modèle simple, le signal synthétique est de la forme :

$$s'(t) = e^{-2\pi j(\hat{f}_i t + \hat{\alpha}_i t^2/2)}$$

ou, dans le cas plus général, de la forme :

$$s'(t) = e^{-j\varphi(t)}$$

avec :

$$\varphi(t) = 2\pi \int_{t_0}^{t} f_{th}(u, \vec{\theta}) \, du$$

Grâce à ce signal synthétique ainsi calculé, on peut alors stationnariser le signal s(t) reçu par démodulation par s'(t), c'est-à-dire par simple multiplication. Pour cela, on stocke le signal s(t) reçu dans une mémoire 7 et on le restitue en même temps que le signal synthétique s'(t) à un multiplicateur ou mélangeur 8. Celui-ci fournit donc un signal stationnarisé s"(t) qui est envoyé à un dispositif d'analyse spectrale classique 9 (par exemple par transformée de Fourier) qui peut effectuer l'analyse sur une durée d'analyse T longue, donc avec une haute résolution en fréquence. Les signaux de sortie de l'analyse spectrale sont envoyés à un dispositif à seuil 10 qui permet le dénombrement des cibles constitutives du motif (multicible) analysé. Ce dénombrement et l'affichage du résultat sont effectués par un circuit 11.

A titre d'exemple illustratif, la figure 3 montre le spectre d'un motif fourni par le dispositif d'analyse 2 : on ne peut pas séparer les cibles constituant le motif. Après traitement selon l'invention, le spectre fourni par le dispositif d'analyse spectrale 9 est représenté pour le même motif sur la figure 4. On voit distinctement les pics correspondant aux cinq cibles constituant le motif, ce qui permet avec le dispositif à seuil 10 de bien dénombrer ces cibles.

Ainsi, le procédé selon l'invention permet une amélioration sensible de la résolution en fréquence pour le traitement de signaux non stationnaires et il apparaît bien adapté aux contraintes de traitement en temps réel du signal radar notamment. Le dispositif à haute résolution prévu selon l'invention est tout à fait simple et robuste.

Bien entendu, l'exemple de réalisation décrit n'est nullement limitatif de l'invention.

## Revendications

1. Procédé d'analyse spectrale à haute résolution pour signaux de système de détection électromagnétique non stationnaires, dans lequel on réalise une première analyse spectrale glissante de type connu desdits signaux sur une première durée d'analyse ($\Delta t$) correspondant à la durée de validité du modèle d'évolution choisi pour lesdits signaux non stationnaires, ledit procédé étant caractérisé en ce qu'il consiste à :
   - effectuer un pistage Doppler, en fonction du temps, de la fréquence instantanée obtenue par ladite première analyse ;
   - estimer pour une piste choisie les paramètres ($\vec{\theta}$) de la loi d'évolution de la fréquence Doppler retenue ;
   - déterminer à partir desdits paramètres un signal synthétique de fréquence instantanée opposée à la fréquence instantanée estimée théorique correspondant auxdits paramètres ;
   - stationnariser lesdits signaux fournis par ledit système par démodulation à l'aide dudit signal synthétique ;
   - effectuer une seconde analyse spectrale de type connu dudit signal stationnarisé, sur une durée d'analyse (T) longue par rapport à la première durée d'analyse pour obtenir une résolution améliorée ; et
   - effectuer un dénombrement des cibles dans le signal analysé selon ladite seconde analyse par comparaison à un seuil déterminé.

2. Procédé selon la revendication 1, caractérisé en ce que dans les étapes consistant à estimer les paramètres et à déterminer un signal synthétique, la loi d'évolution de la fréquence Doppler est une loi de modulation linéaire de fréquence de la forme $f_i(t) = f_i + \alpha_i.t$ pour la piste de rang i, où $f_i$ est une valeur initiale de fréquence et $\alpha_i$ la pente de modulation, ces deux valeurs $f_i$ et $\alpha_i$ étant estimées à partir desdits paramètres ($\vec{\theta}$).

3. Dispositif d'analyse spectrale à haute résolution pour signaux de système de détection électromagnétique non stationnaires, mettant en oeuvre le procédé selon l'une des revendications 1 ou 2, comportant
   - un premier dispositif d'analyse spectrale (2) glissante à durée d'analyse ($\Delta t$) courte recevant lesdits signaux non stationnaires ; caractérisé en ce qu'il comprend :
   - un système de pistage Doppler (3) multicibles recevant les signaux dudit premier dispositif (2) et fournissant au moins une courbe de variation fréquence instantanée-temps correspondant à une piste vraisemblable ;
   - un dispositif (5) d'estimation des paramètres ($\vec{\theta}$) d'une cible correspondant à ladite courbe ;
   - une unité de gestion (4) pour sélectionner une des pistes fournies par ledit système de pistage (3) et commander ledit dispositif d'estimation (5) ;
   - des moyens (6) de restitution d'un signal synthétique de ladite fréquence instantanée opposée à partir desdits paramètres ;
   - des moyens de mémorisation (7) pour stocker lesdits signaux non stationnaires fournis par le système de détection (1) ;
   - des moyens (8) de démodulation desdits signaux stockés dans lesdits moyens de mémorisation (7) par ledit signal synthétique pour obtenir un signal stationnarisé ;
   - un second dispositif d'analyse spectrale (9) à durée d'analyse longue par rapport à la première durée d'analyse pour analyser ledit signal stationnarisé ; et
   - des moyens de comparaison à seuil (10) pour extraire des signaux fournis par ledit second dispositif (9) des informations sur le nombre de cibles ayant contribué à fournir les signaux correspondant à ladite piste sélectionnée.

4. Dispositif selon la revendication 3, caractérisé en ce que lesdits premier et second dispositifs d'analyse spectrale (2, 9) comprennent chacun un calculateur de transformée de Fourier.

5. Dispositif selon l'une des revendications 3 ou 4, caractérisé en ce que lesdits moyens de démodulation (8) comprennent un multiplicateur de signaux.

## Patentansprüche

1. Verfahren zur hochauflösenden Spektralanalyse von nichtstationären Signalen eines elektromagnetischen Erfassungssystems, in dem eine erste an sich bekannte gleitende Spektralanalyse der Signale während einer ersten Analysedauer ($\Delta t$) entsprechend der Dauer der Gültigkeit des für die nicht stationären Signale gewählten Entwicklungsmodells durchgeführt wird, dadurch gekennzeichnet, daß das Verfahren darin besteht,
   - eine Dopplerverfolgung der bei der ersten Analyse erhaltenen augenblicklichen Frequenz abhängig von der Zeit durchzuführen,

- für einen gewählten Verlauf die Parameter (Θ) des gewählten Entwicklungsgesetzes der Dopplerfrequenz abzuschätzen,
- ausgehend von diesen Parametern ein synthetisches Signal der augenblicklichen Frequenz zu bestimmen, die der diesen Parametern entsprechenden theoretischen und geschätzten Augenblicksfrequenz gegenübersteht,
- die von dem System gelieferten Signale durch Demodulation mit Hilfe des synthetischen Signals stationär zu machen,
- eine zweite an sich bekannte Spektralanalyse des nunmehr stationären Signals über eine lange Analysedauer (T) im Vergleich zur ersten Analysedauer durchzuführen, um eine verbesserte Auflösung zu erreichen,
- die Zielobjekte in den gemäß der zweiten Analyse erhaltenen Signalen durch Vergleich mit einer gegebenen Schwelle abzuzählen.

2. Verfahren nach Anspruch 1, dadurch gekennzeichnet, daß in den Schritten des Abschätzens der Parameter und der Bestimmung eines synthetischen Signals das Entwicklungsgesetz der Dopplerfrequenz ein lineares Modulationsgesetz der Frequenz folgender Form ist: $f_i(t) = f_i + \alpha_i t$ (für den Verlauf des Rangs i), wobei $f_i$ der ursprüngliche Frequenzwert und $\alpha_i$ die Modulationssteigung ist und diese beiden Werte $f_i$ und $\alpha_i$ gemäß den Parametern (Θ) abgeschätzt werden.

3. Vorrichtung zur hochauflösenden Spektralanalyse von nichtstationären Signalen eines elektromagnetischen Erfassungssystems, die das Verfahren gemäß einem der Ansprüche 1 oder 2 anwendet, mit einer ersten Vorrichtung (2) zur gleitenden Spektralanalyse mit einer kurzen Analysedauer (Δt), der die nicht-stationären Signale zugeführt werden, dadurch gekennzeichnet, daß die Vorrichtung enthält:
  - ein Mehrfachzielsystem zur Erfassung des Dopplerverlaufs (3), das die Signale von der ersten Vorrichtung (2) empfängt und mindestens eine Kurve der Veränderung der augenblicklichen Frequenz über der Zeit entsprechend einem wahrscheinlichen Verlauf liefert,
  - eine Vorrichtung (5) zum Abschätzen der Parameter (Θ) eines Ziels entsprechend dieser Kurve,
  - eine Verwaltungseinheit (4), um einen der von dem Dopplersystem (3) gelieferten Verläufen auszuwählen und die Abschätzvorrichtung (5) zu steuern,
  - Mittel (6) zur Ausgabe eines synthetischen Signals der entgegengesetzten Augenblicksfrequenz ausgehend von diesen Parametern,
  - Speichermittel (7) zur Speicherung der nicht-stationären Signale, die von dem Erfassungssystem (1) geliefert werden,
  - Mittel (8) zur Demodulation der in den Speichermitteln (7) gespeicherten Signale mit dem synthetischen Signal, um ein stationäres Signal zu erhalten,
  - eine zweite Spektralanalysevorrichtung (9), deren Analysedauer lang im Vergleich zur ersten Analysedauer ist, um das stationäre Signal zu analysieren,
  - und Vergleichsmittel (10) mit einer Schwelle, um aus den von der zweiten Vorrichtung (9) gelieferten Signalen Informationen über die Anzahl der Ziele zu entnehmen, die zur Bildung der Signale entsprechend dem ausgewählten Verlauf beigetragen haben.

4. Vorrichtung nach Anspruch 3, dadurch gekennzeichnet, daß die ersten und zweiten Spektralanalysemittel (2, 9) je einen Rechner für die Fourier-Transformierte enthalten.

5. Vorrichtung nach einem der Ansprüche 3 oder 4, dadurch gekennzeichnet, daß die Demodulationsmittel (8) einen Signalmultiplizierer enthalten.

## Claims

1. Method of high-resolution spectral analysis for non-stationary signals of an electromagnetic detection system, in which a first sliding spectral analysis of known type of the said signals is carried out over a first analysis duration (Δt) corresponding to the duration of validity of the development model chosen for the said non-stationary signals, the said method being characterized in that it consists in:
  - carrying out a Doppler tracking, as a function of time, of the instantaneous frequency obtained by the said first analysis;
  - estimating, for a chosen track, the parameters ($\vec{\theta}$) of the Doppler frequency development law adopted;
  - determining, from the said parameters, a synthetic signal of instantaneous frequency opposed to the theoretical estimated instantaneous frequency corresponding to the said parameters;
  - making the said signals supplied by the said system stationary by demodulation by use of the said synthetic signal;

- carrying out a second spectral analysis, of known type, of the said signal made stationary, over an analysis duration (T) which is long with respect to the first analysis duration, in order to obtain an improved resolution; and
- carrying out a count of the targets in the signal analysed in accordance with the said second analysis by comparison with a determined threshold.

2. Method according to Claim 1, characterized in that in the steps consisting in estimating the parameters and in determining a synthetic signal, the Doppler frequency development law is a linear frequency modulation law of the form $f_i(t) = f_i + \alpha_i.t$ for the track of rank i, where $f_i$ is an initial frequency value and $\alpha_i$ the modulation gradient, these two values $f_i$ and $\alpha_i$ being estimated from the said parameters ($\theta$).

3. Device for high-resolution spectral analysis for non-stationary signals of an electromagnetic detection system, implementing the method according to one of Claims 1 or 2, comprising a first sliding spectral analysis device (2) with a short analysis duration ($\Delta t$) receiving the said non-stationary signals; characterized in that it comprises

- a multi-target Doppler tracking system (3) receiving the signals from the said first device (2) and supplying at least one instantaneous frequency/time variation curve corresponding to a likely track;
- a device (5) for estimating the parameters ($\vec{\theta}$) of a target corresponding to the said curve;
- a management unit (4) for selecting one of the tracks supplied by the said tracking system (3) and controlling the said estimating device (5);
- means (6) for reproduction of a synthetic signal of the said opposed instantaneous frequency from the said parameters;
- storage means (7) for storing the said non-stationary signals supplied by the detection system (1);
- means (8) for demodulation of the said signals stored in the said storage means (7) by the said synthetic signal in order to obtain a signal made stationary;
- a second spectral analysis device (9), having an analysis duration which is long with respect to the first analysis duration, for analysing the said signal made stationary; and
- threshold comparison means (10) for extracting from the signals supplied by the said second device (9) information on the number of targets having contributed to supplying the signals corresponding to the said selected track.

4. Device according to Claim 3, characterized in that the said first and second spectral analysis devices (2, 9) each comprise a Fourier transform computer.

5. Device according to one of Claims 3 or 4, characterized in that the said demodulating means (8) comprise a signal multiplier.

# FIG_1

FIG_2

FIG_3

FIG_4